# EUROPEAN PATENT APPLICATION

(11) **EP 1 067 516 A1**
(43) Date of publication of application: **10.01.2001**
(21) Application number: 00114292.6
(22) Date of filing: 04.07.2000
(51) Int. Cl.: G11B 5/64

(54) **Magnetic recording medium**

(30) Priority: 05.07.1999 JP 19069299
(71) Applicant: SONY CORPORATION, Tokyo (JP)
(72) Inventor: Onodera, Seiichi, c/o SONY CORPORATION, Tokyo (JP)
(74) Representative: MÜLLER & HOFFMANN Patentanwälte

(57) **Abstract**

A magnetic recording medium having a metal magnetic thin film, i.e., magnetic layer. The metal magnetic thin film has a thickness and residual magnetism, both optimized to a GMR head. The recording medium is used in a helical-scan magnetic recording system that incorporates the GMR head. The metal magnetic thin film helps to provide a high-density recording system unknown hitherto. The metal magnetic thin film is provided on a nonmagnetic support and has residual magnetism Mr and thickness δ, the product Mr·δ of which ranges from 0.5 to 1.5 memu/cm².

## Description

### BACKGROUND OF THE INVENTION

The present invention relates to a magnetic recording medium of so-called "metal magnetic thin-film type." More particularly, the invention relates to a magnetic recording medium suitable for use in a helical-scan magnetic recording system that has a giant magnetoresistive reproducing head.

The magnetic recording media hitherto used widely are those of so-called "coated type," each comprising a nonmagnetic support and a magnetic coating applied on the nonmagnetic support. The magnetic coating consists of an organic binder such as copolymer of vinyl chloride and vinyl acetate, polyester resin, polyurethane resin or the like, and magnetic powder dispersed in the organic binder.

It is increasingly demanded that data be recorded at high density. To meet this demand, magnetic recording media of so-called "metal magnetic thin-film type" have been proposed and now attract much attention. A magnetic recording medium of this type comprises a nonmagnetic support and a magnetic metal film deposited directly on the support. The magnetic metal film is, for example, a Co-Ni film, a Co-Cr film, a Co film or the like, and has been deposited by means of plating or a vacuum thin-film forming method (e.g., vacuum deposition, sputtering, ion plating or the like).

The magnetic recording medium of metal magnetic thin-film type excels in coercive force, residual magnetism, squareness, and it exhibits good electromagnetic conversion characteristic at short wavelengths. Moreover, it undergoes only a little magnetism reduction during the data-recording process and has but a small thickness loss during the data-reproducing process, because its magnetic layer can be extremely thin. In addition, since any binder, which is nonmagnetic material, need not be mixed into the magnetic layer, the magnetic layer has high density and can therefore be magnetized greatly. Thus, the magnetic recording medium of this type is advantageous in various respects.

The electromagnetic conversion characteristic of this magnetic recording medium should better be enhanced to generate larger outputs from the medium. To this end it is proposed that the magnetic layer be vapor-deposited by means of so-called "slantwise vapor deposition," wherein the vapor of magnetic material is applied to the support in a slantwise direction. Magnetic recording media, each having a magnetic layer formed by slantwise vapor deposition, have been put to practical use in the form of magnetic tape for use in high-quality image VTRs and digital VTRs.

The magnetic recording medium of metal magnetic thin-film type (i.e., vapor-deposited tape) has the above-mentioned advantages. If data is reproduced from the vapor-deposited tape by a high-sensitivity, magnetoresistive head (MR head), however, the magnetic flux generated from the tape will be so intense that the signal the head outputs becomes non-linear. The signal output by the head is inevitably distorted.

If the data is reproduced from the vapor-deposited tape by a giant magnetoresistive head (a so-called "GMR head") , which has higher sensitivity, the output of the head can hardly be free from distortion. In other words, good signals cannot be reproduced from the vapor-deposited tape by means of a GMR head.

Generally, the signals the GMR head reproduces from vapor-deposited tapes contain less noise than signals the GMR head reproduces from coated-type magnetic recording media. Hence, vapor-deposited tapes are superior to the coated-type magnetic recording media. However, the thickness of the magnetic layer and the residual magnetism must be optimized in order to prevent the GMR element from being saturated and strained. This is because the thickness of the magnetic layer and the residual magnetism determines the intensity of the magnetic flux at the surface of the vapor-deposited tape.

### BRIEF SUMMARY OF THE INVENTION

The present invention has been made in consideration of the foregoing. The object of the invention is to provide a magnetic recording medium which has a metal magnetic thin film having a thickness and residual magnetism, both optimized to a GMR head, which can be used in a helical-scan system equipped with a GMR head, thereby providing a high-density recording system that is not known hitherto.

A magnetic recording medium according to this invention has a metal magnetic film (i.e., magnetic layer) having a thickness and residual magnetism which are smaller than those of the magnetic layer of the conventional magnetic recording medium and which are optimized to the characteristics of a GMR reproducing head.

The magnetic recording medium according to the present invention comprises a nonmagnetic support and a metal magnetic thin film formed on the support. The magnetic recording medium is characterized in that the metal magnetic thin film has residual magnetism Mr and thickness δ, the product of which ranges from 0.5 to 1.5 memu/cm².

Since the product, Mr·δ, of the residual magnetism Mr and the thickness δ lies within the range specified above, a GMR reproducing head can reproduce, from the magnetic recording medium, signal that are linear characteristic and not distorted.

The product, Mr·δ, of the residual magnetism Mr and thickness δ of the metal magnetic thin film is optimized to the characteristic of the GMR reproducing head. This prevents the GMR element of the head from being saturated. Hence, the GMR reproducing head can reproduce signals that have a great magnitude and contain but small noise.

In particular, the magnetic recording medium of the invention can serve to provide a high-density recording system that is hitherto unknown, when used as a recording medium in a helical-scan magnetic recording system that has a shield-type GMR reproducing head.

### BRIEF DESCRIPTION OF THE SEVERAL VIEWS OF THE DRAWING

FIG. 1 is a perspective view, a schematic representation of the rotary drum device incorporated in a magnetic recording/reproducing apparatus of helical-scan recording system;
FIG. 2 is a schematic plan view of the magnetic tape-feeding mechanism including the rotary drum device;
FIG. 3 is a sectional view illustrating the internal structure of the rotary drum device;
FIG. 4 is a block diagram showing the rotary drum device and the circuits peripheral thereto;
FIG. 5 is a partly sectional, perspective view of the GMR head mounted on the rotary drum of the drum device; and
FIG. 6 is a diagram for explaining how the GMR head reproduce a signal from a magnetic tape.

### DETAILED DESCRIPTION OF THE INVENTION

The magnetic recording medium according to this invention comprises a nonmagnetic support and a metal magnetic thin film formed on the support. The residual magnetism Mr and thickness δ of the metal magnetic thin film are smaller than those in the conventional magnetic recording media and are optimized to the characteristic of a GMR reproducing head.

The thickness of the metal magnetic thin film can be controlled by changing the line speed. The residual magnetism can be controlled by changing the amount of oxygen introduced in the process of forming the metal magnetic thin film.

These parameters are controlled, thereby to provide a magnetic recording medium from which a GMR reproducing head can reproduce signals not distorted and having the largest magnitude possible, without being saturated. More specifically, the metal magnetic thin film is so formed as to have residual magnetism Mr and thickness δ, the product of which ranges from 0.5 to 1.5 memu/cm².

If the product Mr·δ is less than 0.5 memu/cm², the GMR reproducing head will not be able to reproduce signals of sufficient magnitude. Conversely, if the product Mr·δ exceeds 1.5 memu/cm², the GMR reproducing head will be saturated.

The residual magnetism Mr and the thickness δ can be set at any value so long as the product Mr·δ remains within the above-specified range. If the residual magnetism Mr or the thickness δ is insufficient, however, it will be difficult to maintain the product Mr·δ remains in the range of 0.5 memu/cm². If the residual magnetism Mr or the thickness δ is excessively large, the signal reproduced from the recording medium will be distorted.

Therefore, it is desired that the metal magnetic thin film have a thickness δ of 15 to 60 nm and residual magnetism Mr of 200 to 400 emu/cc.

The coersive force in the plane of the magnetic recording medium needs to be 1000 Oe or more so that the GMR reproducing head may reproduce low-noise, high-resolution signals from the medium. If the coersive force exceeds 2500 Oe, however, signals cannot be completely recorded on the medium, and the signals reproduced from the medium will fail to have sufficient magnitudes. It is therefore desired that the coersive force fall within the range of 1000 to 2500 Oe.

To reproduce low-noise, high-resolution signals from the magnetic recording medium, it is desired that the squareness in the plane of the medium fall within the range of 0.8 to 0.9.

The metal magnetic thin film is formed by a method hitherto know, such as sputtering, CVD (Chemical Vapor Deposition), vacuum vapor deposition, ion implantation or the like. A metal magnetic thin film formed by sputtering is particularly preferable. This is because a thin film formed by sputtering is superior to one formed by vacuum vapor deposition not only in adhesion to the nonmagnetic support, but also in corrosion resistance. Sputtering can reliably provide a metal magnetic film that is as thin as 15 to 60 nm.

The metal magnetic thin film is formed on, for example, a Cr under layer. The Cr under layer may be replaced by a CrTi layer, a CrMo layer, a CrV layer, o the like.

It is desired that the metal magnetic thin film be made of CoPt-based metal if it is impossible to raise the temperature of the nonmagnetic support while the thin film is being formed. More specifically, CoCrPt, CoCrTaPt, CoPt-SiO₂, CoCrTaPtNb and the like can be exemplified as the material of the metal magnetic thin film. If the temperature of the nonmagnetic support can be increased to about 200°C or more while the thin film is being formed, the metal magnetic thin film can be made of CoCrTa. CoCrTaPt or CoCrTaPtNb can be used as the material of the thin film if the temperature of the nonmagnetic support can be raised to about 200°C or more while the thin film is being formed.

A protective layer may be formed on the magnetic layer of the magnetic recording medium according to the present invention. The protective layer may be made of any material that can be used to make layers for protecting ordinary metal magnetic thin films. Carbon, CrO₂, Al₂O₃, BN, Co oxide, MgO, SiO₂, Si₃O₄, SiNₓ, SiC, SiNₓ-SiO₂, ZrO₂, TiO₂, TiC and the like can be exemplified as materials of the protective layer. The protective layer may be composed of either a single layer of any one of these materials or two or more layers of some these materials.

The structure of the magnetic recording medium is not limited to those described above. Rather, an undercoating may be provided on the nonmagnetic support, if necessary. A back coating may be provided on that surface of the support which faces away from the metal magnetic thin film. Further, a top coating, e.g., a lubricant film or an anti-corrosive film, may be formed on the metal magnetic thin film or the protective layer. Moreover, the magnetic recording medium may have a plurality of magnetic layers that are laid, on upon another. Still further, the magnetic recording medium may be a disk that exhibits vertical anisotropy or in-plane random orientation.

The magnetic recording medium described above is suitable as magnetic tape for use in helical-scan magnetic recording systems each having a GMR reproduction head.

The GMR reproduction head used in this case is a shield type that comprises a GMR element and two shields sandwiching the GMR element. The shield-type GMR reproduction head is mounted on a rotary drum, thereby constituting a recording/reproducing apparatus.

The magnetic recording medium of this invention can be combined with a helical-scan magnetic recording system having a GMR reproducing head, thereby providing a high-density recording system unknown hitherto.

The magnetic recording/reproducing apparatus designed for use in a helical-scan magnetic recording system is a helical-scan type that records and reproduce data by using a rotary drum. The reproduction magnetic head mounted on the rotary drum is a GMR head.

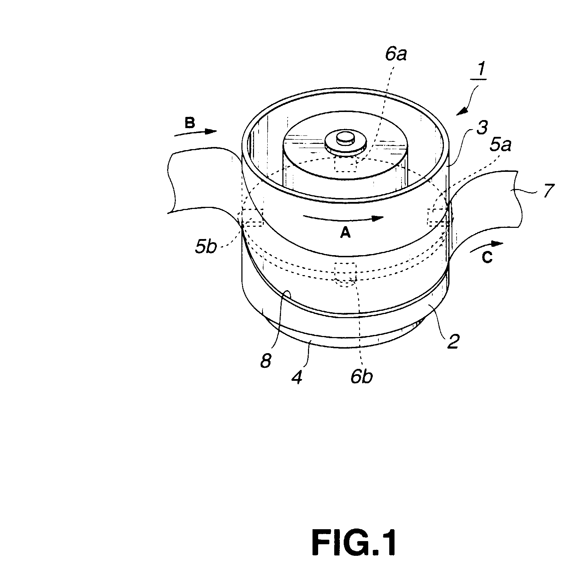

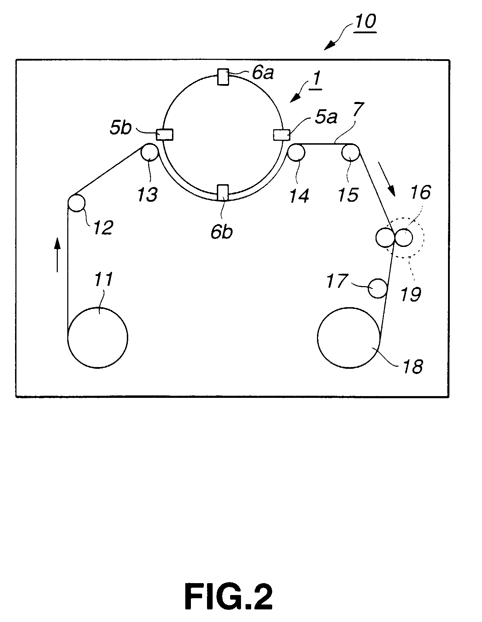

A rotary drum device 1 that may be incorporated in this magnetic recording/reproducing apparatus is shown in FIGS. 1 and 2. FIG. 1 is a perspective view of the rotary drum device 1. FIG. 2 is a schematic plan view of the magnetic-tape feeding mechanism 10 including the rotary drum device 1.

As shown in FIG. 1, the rotary drum device 1 comprises a stationary drum 2, a rotary drum 3, a motor 4, a pair of inductive magnetic heads 5a and 5b, and a pair of GMR heads 6a and 6b. The stationary drum 1 and the rotary drum 3 are hollow cylinders. The motor 4 is provided to drive the rotary drum 3. The inductive magnetic heads 5a and 5b and the GMR heads 6a and 6b are mounted on the rotary drum 3.

The stationary drum 2 is held, unable to rotate at all. The stationary drum 2 has a read-guide section 8 on its circumferential surface. The section 8 extends in the direction in which a magnetic tape 7 may run. As will be later described in detail, the magnetic tape 7 runs along the read-guide section 8. The rotary drum 3 is arranged in axial alignment with the stationary drum 2.

The motor 4 rotates the rotary drum 3 at a predetermined speed when the magnetic recording/reproducing apparatus records data on or reproduces data from the magnetic tape 7. The rotary drum 3, which is a hollow cylinder, has almost the same diameter as the stationary drum 2. The inductive magnetic heads 5a and 5b and the GMR heads 6a and 6b are located near the stationary drum 2.

The inductive magnetic heads 5a and 5b are identical in structure, each comprising a pair of magnetic cores and a coil wound around the cores. The magnetic cores are connected together, providing a magnetic gap between them. Both heads 5a and 5b are used to record signals on the magnetic tape 7. The inductive magnetic heads 5a and 5b are diametrically opposite across the axis of the rotary drum 3. In other words, the heads 5a and 5b are spaced apart by 180°, along the circumference of the drum 3. The heads 5a and 5b are so positioned that their distal ends, each having a magnetic gap, protrude from the outer circumferential surface of the rotary drum 3. The inductive heads 5a and 5b have opposite azimuth angles so as to accomplish azimuth recording on the magnetic tape 7.

The GMR heads 6a and 6b are provided to reproduce signals from the magnetic tape 7. The GMR heads 6a and 6b have a spin-valve element each, which detects a signal from the magnetic tape 7. They are diametrically opposite across the axis of the rotary drum 3. In other words, the heads 6a and 6b are spaced apart by 180°, along the circumference of the drum 3. The heads 6a and 6b are so positioned that their distal ends, each having a magnetic gap, protrude from the outer circumferential surface of the rotary drum 3. The GMR heads 6a and 6b have opposite azimuth angles so as to accomplish azimuth recording on the magnetic tape 7.

The magnetic tape 7 is made to run, in sliding contact with the rotary drum device 1, whereby the magnetic recording/reproducing apparatus records signals on the tape 7 or reproduce signals therefrom.

As shown in FIG. 2, the magnetic tape 7 is fed from a supply reel 11, guided by guide rollers 12 and 13, wrapped around the rotary drum device 1. The rotary drum device 1 records signals on the tape 7 or reproduces signals from the tape 7. The magnetic tape 7, on which signals have been recorded or from which signals have been reproduced, is further guided by guide rollers 14 and 15, a capstan 16 and a guide roller 17 and fed to a take-up reel 18. The capstan 16 feeds the tape 7 at a predetermined speed, applying a prescribed tension to the tape 7. The magnetic tape 7 is then guided by the guide roller 17 and taken up around the take-up reel.

At the same time, the motor 4 rotates the rotary drum 3 in the direction of arrow A shown in FIG. 1. The magnetic tape 7 is fed along the read-guide section 8 of the stationary drum 2, slantwise with respect to the stationary drum 2 and rotary drum 3 and in sliding contact both drums 2 and 3. More precisely, the magnetic tape 7 is fed from the tape take-out side along the read-guide section 8 as indicated by arrow B in FIG. 1, in siding contact with the stationary drum 2 and rotary drum 3, and is thereafter fed to the tape take-up side in the direction of arrow C in FIG. 1.

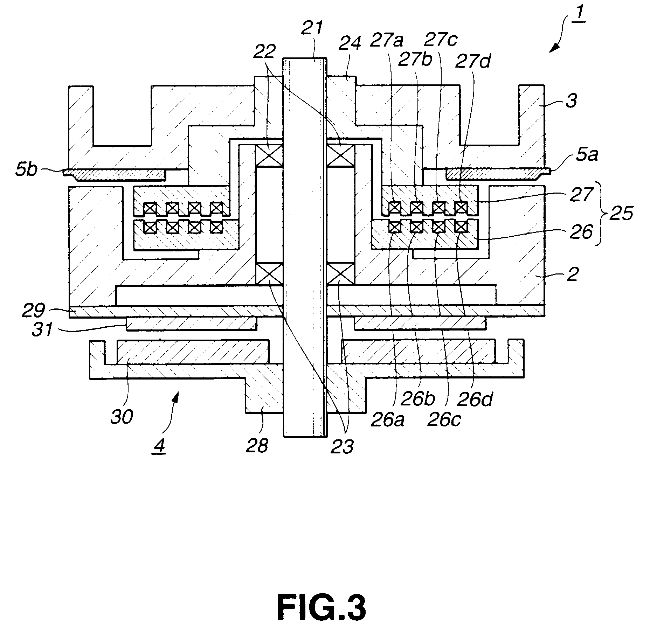

The internal structure of the rotary drum device 1 will be described, with reference to FIG. 3.

As shown in FIG. 3, a shaft 21 extends through the stationary drum 2 and rotary drum 3 and located coaxial the drums 2 and 3. Note that the stationary drum 2, rotary drum 3 and shaft 21 are made of electrically conductive material. The drums 2, the drum 3 and the shaft 21 are electrically connected to one another. The stationary drum 2 is connected to the ground.

Two bearings 22 and 22 are provided in the stationary drum 2. The bearings 22 and 23 support the shaft 21, which can rotate with respect to the stationary drum 2. That is, the shaft 21 is supported by the bearings 22 and 23 and rotatable with respect to the stationary drum 2. A flange 24 is secured to the inner surface of the rotary drum 3 and is mounted on and secured to the upper end portion of the shaft 21. Hence, the rotary drum 3 rotates when the shaft 21 rotates.

A rotary transformer 25, i.e., a non-contacting signal transfer device, is provided in the rotary drum 1, for supplying signals between the stationary drum 2 and the rotary drum 3. The rotary transformer 25 has a stator core 26 and a rotor core 27. The stator core 26 is attached to the stationary drum 2. The rotor core 27 is fastened to the rotary drum 3.

The stator core 26 and rotor core 27 are annular members made of magnetic material such as ferrite. Both cores 26 and 27 are so positioned that the shaft 21 extends through them and lies in axial alignment with them. Four signal-transfer rings 26a to 26d are embedded in the upper surface of the stator core 26 and arranged coaxial to one another. The rings 26a and 26b are provided to supply signals to the inductive magnetic heads 5a and 5b, respectively. The ring 26c is provided to supply signals to the GMR heads 6a and 6b. The ring 26d is provided to supply power to drive the GMR heads 6a and 6b. Similarly, four signal-transfer rings 27a to 27d are embedded in the lower surface of the rotor core 27 and arranged coaxial to one other. The rings 27a and 27b are provided to supply signals to the inductive magnetic heads 5a and 5b, respectively. The ring 27c is provided to supply signals to the GMR heads 6a and 6b. The ring 27d is provided to supply power to drive the GMR heads 6a and 6b.

The rings 26a to 26d and the ring 27a to 27d are coils. The rings 26a, 26b, 26c and 26d embedded in the stator core 26 oppose the rings 27a, 27b, 27c and 27d embedded in the rotor core 27, respectively. In the rotary transformer 25 thus constructed, signals and power are transferred between the rings 26a to 26d, on the one hand, and the rings 27a to 27d, on the other, in non-contact manner.

The motor 4 is coupled with the rotary drum device 1, for rotating the rotary drum 3. The motor 4 has a rotor 28 and a stator 29. The rotor 28 is secured to the lower end portion of the shaft 21. The stator 29 is fastened to the lower surface of the stationary drum 2. A drive coil 31 is mounted on the stator 29. When an electric current flows through the drive coil 31, the rotor 28 is rotated and, hence, the shaft 21 is rotated. The rotary drum 3 fastened to the shaft 21 is therefore rotated.

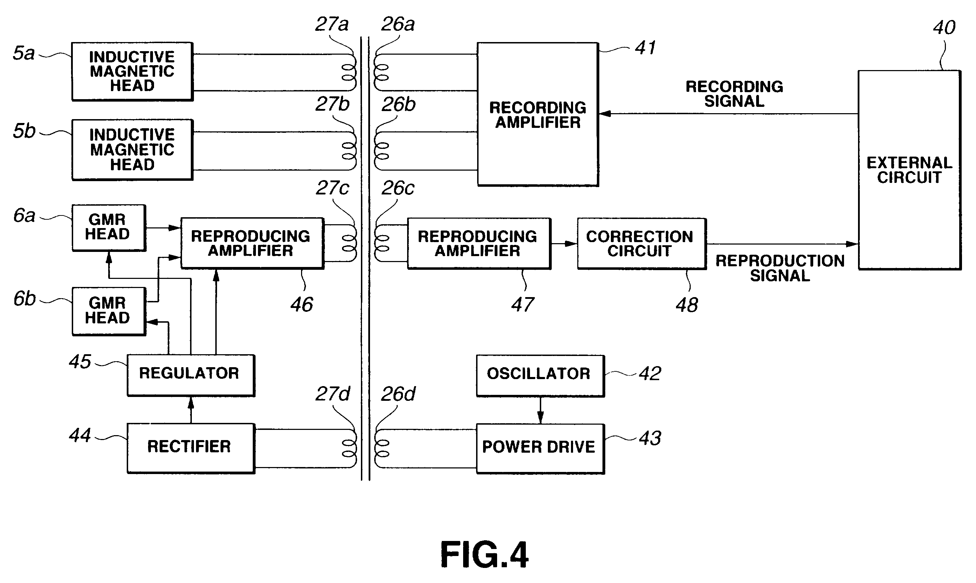

How the rotary drum device 1 records signals on, and reproduces signals form, the magnetic tape 7 will be described, with reference to FIG. 4 that shows the rotary drum device 1 and the circuits peripheral to the device 1.

To record signals on the magnetic tape 7 by means of the rotary drum device 1, a current is supplied to the drive coil 31 of the motor 4. The rotary drum 3 is thereby rotated. While the rotary drum 3 is rotating, as shown in Fig. 4, an external circuit 40 supplies a signal to a recording amplifier 41.

The recording amplifier 41 amplifies the signal. The signal amplified is supplied to the signal-transfer ring 26a on the stator core 26, which is provided for the inductive magnetic head 5a, at the timing of recording the signal by means of this magnetic head 5a. At the same time, the signal is supplied to the signal-transfer ring 26b on the stator core 26, too, which is provided for the inductive magnetic head 5b.

As described above, the inductive magnetic heads 5a and 5b are spaced apart by 180°, along the circumference of the drum 3. Therefore, the signal the head 5a records differs in phase by 180° from the signal the head 5b records. The recording amplifier 41 supplies signals alternately to the heads 5a and 5b, at phase intervals of 180°.

The signal supplied to the signal-transfer ring 26a embedded in the stator core 26 provided for the inductive magnetic head 5a is transferred to the signal-transfer ring 27a embedded in the rotor core 27 that does not contact the stator core 26. The signal is supplied from the signal-transfer ring 27a to the inductive magnetic head 5a, The head 5a records the signal on the magnetic tape 7.

Similarly, the signal supplied to the signal-transfer ring 26b embedded in the stator core 26 provided for the inductive magnetic head 5b is transferred to the signal-transfer ring 27b embedded in the rotor core 27 that does not contact the stator core 26. This signal is supplied from the signal-transfer ring 27b to the inductive magnetic head 5b. The head 5b records the signal on the magnetic tape 7.

To reproduce signals on the magnetic tape 7 by means of the rotary drum device 1, a current is supplied to the drive coil 31 of the motor 4. The rotary drum 3 is thereby rotated. While the rotary drum 3 is rotating, as shown in Fig. 4, an oscillator 42 supplies a high-frequency current to a power drive 43.

The power drive 43 converts the high-frequency current to an alternating current. The alternating current is supplied to the signal-transfer ring 26d embedded in the stator core 26. The alternating current is supplied from the ring 26d to the signal-transfer ring 27d embedded in the rotor core 27 that does not contact the stator core 26. A rectifier 44 rectifies the alternating current supplied to the ring 27d, generating a direct current. The direct current is supplied to a regulator 45, which sets the direct current at a prescribed voltage.

The current set at the prescribed voltage by the regulator is supplied, as a sense current, to the GMR heads 6a and 6b. The GMR heads 6a and 6b are connected to a reproducing amplifier 46 that is provided to detect the signals supplied from the GMR heads 6a and 6b. The recording amplifier 45 receives the current supplied from the regulator 45.

As mentioned above, the GMR heads 6a and 6b incorporates a spin-valve element each. A spin-valve element has its resistance changed in accordance with an external magnetic field. Thus, the resistance of the spin-valve elements provided of the GMR heads 6a and 6b changes in accordance with the signal magnetic field of the magnetic tape 7. The change in the resistance results in a change in the voltage of the sense current.

The reproducing amplifier 46 detects this change in the voltage, generating a signal that corresponds to the voltage change. The reproducing amplifier 46 outputs the signal detected by the GMR head 6a, at the timing of reproducing a signal by the GMR head 6a. It outputs the signal detected by the GMR head 6b, at the timing of reproducing a signal by the GMR head 6b.

As described above, the GMR heads 6a and 6b are spaced apart by 180°, along the circumference of the rotary drum 3. Therefore, the signal the head 6a records differs in phase by 180° from the signal the head 6b records. The reproducing amplifier 46 supplies signals alternately to the heads 6a and 6b, at phase intervals of 180°.

The signal supplied from the reproducing amplifier 46 to the signal-transfer ring 27c embedded in the rotor core 27. The signal reproduced is transferred to the signal-transfer ring 26c embedded in the stator core 26 which does not contacts the rotor core 27. The signal transferred to the ring 26c is amplified by the reproducing amplifier 47 and supplied to a correction circuit 48. The correction circuit 48 corrects the signal, which is output to the external circuit 40.

In the magnetic recording/reproducing apparatus of FIG. 4, the inductive magnetic heads 5a and 5b, GMR heads 6a and 6b, rectifier 44, regulator 45 and reproducing amplifiers 46 are mounted on the rotary drum 3. The heads 5a, 5b, 6a and 6b, rectifier 44, regulator 45 and amplifiers 46 are therefore rotated wen the rotary drum 3 is rotated. On the other hand, the recording amplifier 41, oscillator 42, power drive 43, reproducing amplifiers 47 and correction circuit 48 are mounted on the stationary drum 2 of the rotary drum device 1 or provided outside the rotary drum device 1.

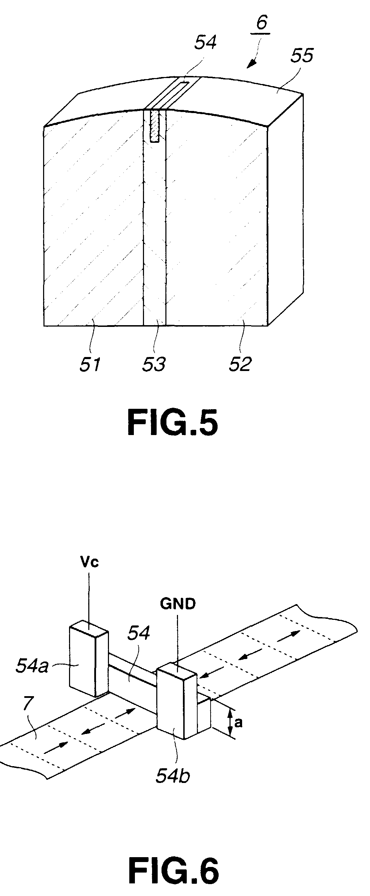

The GMR heads 6a and 6b, both mounted on the rotary drum 3, will be described in detail, with reference to FIG. 5. Note that the GMR heads 6a and 6b are identical in structure, except that they have opposite azimuth angles. Hence, a GMR head 6 representing both heads 6a and 6b will be described below.

The GMR head 6 is mounted on the rotary drum 3 in order to reproduce signals from the magnetic tape 7, by utilizing a tremendous magnetoresistive effect, in a helical-scan magnetic recording system. Generally, a GMR head has a higher sensitivity and outputs a larger output than an inductive magnetic head or an anisotropic magnetoresistive head which record and reproduce signals by using electromagnetic induction. In view of this, the GMR head is fit for use in high-density recording. The GMR head 6 can therefore help to accomplish signal recording at a higher density when it is employed as a reproducing magnetic head.

As shown in FIG. 5, the GMR head 6 comprises a pair of magnetic shields 51 and 52, an insulating layer 53, and a GMR element 54. The magnetic shields 51 and 52 are made of soft magnetic material such as Ni-Zn polycrystalline ferrite. The insulating layer 53 is sandwiched between the magnetic shields 51 and 52. The GMR element 54 is a substantially rectangular plate that is set in the layer 53, with two adjoining sides exposed. Two terminals extend from the two ends of the GMR element 54. It is through these terminals that a sense current can be supplied to the GMR element 54.

In the GMR head 6, the GMR element 54 is spaced apart from the magnetic shields 51 and 52 by a gap of 100 nm or less. The GMR head 6 excels in frequency characteristic, owing to this specific gap.

The GMR element 54 has a spin-valve element. The spin-valve element is composed of a free magnetization layer, a fixed magnetization layer and a nonmagnetic layer. The free magnetization layer can be magnetized in various directions with respect to an external magnetic field. The fixed magnetization layer is fixedly magnetized. The nonmagnetic layer is sandwiched between the free magnetization layer and the fixed magnetization layer. The spin-valve element further has an antiferromagnetic layer laid on the fixed magnetization layer, for fixing the magnetization of the fixed-magnetization layer.

The GMR element 54 is substantially rectangular. The element 54 is set in the insulating layer 53, which is sandwiched between the magnetic shields 51 and 52. The element 54 has one side exposed at the tape-sliding surface 55 of the GMR head 6. The GMR element 54 is held such that its longer sides of the GMR element 54 are perpendicular to the tape-sliding surface 55 and its shorter sides of the GMR element 54 extend almost at right angles to the tape-sliding surface 55.

The tape-sliding surface 55 of the GMR head 6 is polished by cylindrical grinding and curved in the direction of feeding the magnetic tape 7, such that one side of the GMR element 54 exposed. The tape-sliding surface 55 is polished by cylindrical grinding, also in a direction that is at right angles to the tape-feeding direction. As a result, the GMR head 6 protrudes most at the GMR element 54 or the part near the GMR element 54. The GMR element 54 therefore has good tape-contacting characteristic with respect to the magnetic tape.

To generate signals from the magnetic tape 7 by means of the GMR head 6 described above, the magnetic tape 7 is fed in sliding contact with the GMR element 54. In FIG. 6, the arrows indicate the directions in which the magnetic tape 7 is magnetized.

While the magnetic tape 7 is fed, sliding on the GMR element 54, a sense current is supplied to the GMR element 54 through the terminals 54a and 54b that are connected to the ends of the GMR element 54. Changes in the voltage of the sense current are detected. More specifically, a predetermined voltage Vc is applied from the terminal 54a connected to one end of the element 54, to the terminal 54b and the terminal 54b connected to the other end of the element 54, and the terminal 54b is kept connected to the rotary drum 3. The rotary drum 3 is electrically connected to the stationary drum 2 by the shaft 21, and the stationary drum 2 is connected to the ground. The terminal 54b, which is connected to the GMR element 54, is therefore connected to the ground by the rotary drum 3 and the stationary drum 2.

When the sense current is supplied to the GMR element 54 on which the magnetic tape 7 is sliding, the direction in which the free magnetization layer is magnetized changes in accordance with the magnetic field applied from the magnetic tape 7 to the GMR element 54. This changes the angle between the direction of magnetizing the fixed-magnetization layer and the direction of magnetizing the free magnetization layer. At this time, the sense current supplied to the GMR element 54 depends upon the angle between the directions of magnetizing the fixed-magnetization layer and free magnetization layer. As a result, the resistance of the GMR element 54 changes. Thus, the voltage of the sense current supplied to the GMR element 54 changes when the resistance of the GMR element 54 changes, if the value of the current supplied to the GMR element 54 remains unchanged. The changes in the voltage of the sense current are detected, thereby detecting the magnetic field emanating from the magnetic tape 7, whereby signals are reproduced from the magnetic tape 7.

It is desired that the GMR head 6 produce an output at the rate of 600 µV/µm to 10 mV/µm. As mentioned above, the product Mr·δ set for the magnetic tape 7 ranges from 0.5 to 1.5 memu/cm². The GMR head 6 can therefore produce an output at the rate of 600 µV/µm to 10 mV/µm, without fail. In other words, it will be difficult for the GMR head 6 to reproduce an output at the rate of 600 µV/µm to 10 mV/µm if the product Mr·δ set for the magnetic tape 7 is less than 0.5 memu/cm². On the other hand, if the product Mr·δ exceeds 1.5 memu/cm², the spin-valve element of the GMR head 6, which has been described above, will be saturated, making it difficult for the head 6 to generate signals free of distortion.

It is desired that the GMR element 54 have a height a (FIG. 6) of 0.5 to 1.0 µm. So long as the height a falls within this specific range (i.e., 0.5 to 1.0 µm), the GMR element 54 (i.e., spin-valve element) can operate reliably in spite of the wear at the tape-sliding surface 55 of the GMR head 6. To be more specific, even if the tape-sliding surface 55 is worn to about 0.1 to 0.3 µm, the spin-valve element can reliably operate, provided the GMR element 54 has a height a of 0.5 to 1.0 µm.

Specific embodiments of the present invention will be described, on the basis of the results of experiments.

### Embodiment 1

First, a polyethyleneterephthalate film, 10 µm thick and 150 mm wide, was prepared. A water-soluble latex was applied on the major surface of the film, forming an undercoating that has a density of 10,000,000 grains/mm².

A CoPtCr-based metal magnetic thin film was formed on the undercoating by means of sputtering. Note that the metal magnetic thin film was formed on a Cr undercoating having a thickness of 60 nm, under the conditions that will be shown below.

### Film-Forming Conditions:

| | |
|---|---|
| Degree of vacuum before the sputtering: | 8 × 10⁻⁵ Pa. |
| Ar Pressure: | 5 mTorr |
| Voltage applied: | 0.3 kW |

By performing sputtering in these conditions, a metal magnetic thin film of CoPt₁₂Cr₁₅ was formed by sputtering on the Cr undercoating, to the thickness of 25 nm. Thereafter, a carbon film was formed to the thickness of about 25 nm on the magnetic layer formed as mentioned above, by means of sputtering or CVD.

Then, a back coat layer made of carbon black and urethane resin was formed to a thickness of 0.6 µm, on that surface of the nonmagnetic support which faces away from the magnetic layer. Further, lubricant made of perfluoropolyether was applied to the surface of the carbon film. Thereafter, the resultant product was cut into 8-mm wide strips, manufacturing sample magnetic tapes.

The sample tapes thus manufactured exhibited residual magnetism of 300 emu/cc, coercive force of 1800 Oe and squareness of 0.8.

The electromagnetic conversion characteristic of the sample tape was measured. More precisely, data signals were recorded on each sample tape at the recording wavelength of 0.5 µm, by means of a modified 8-mm VTR. The signals were then reproduced from each sample tape by a yoke-type GMR head, and the noise level and error rate were measured.

The yoke-type GMR head used was one that comprises a spin-valve element having a free magnetization layer made of CoFe and exhibiting a resistance changing rate of about 5% and a pair or shields spaced apart by a distance of 0.17 µm. The yoke-type GMR head was adjusted to have a track width of 3 µm, an azimuth angle of 25 deg, and a yoke height of about 1 µm.

### Embodiments 2-5 and Comparative Examples 1-3

In Embodiments 2 to 5 and Comparative Examples 1 to 3, sample tapes were manufactured in the same way as in Embodiment 1, except that the product Mr·δ was as shown in the following Table 1.

The sample tapes according to Embodiments 1 to 5 and Comparative Examples 1 to 3 were examined for their reproduced outputs (at recording wavelength: 0.5 µm), noise levels (at a frequency 1 MHz less than that of the carrier signal) and error rates (symbol error rates). The result is indicated in Table 1.

**Table 1**

| | Mr·δ × 10⁻³emu/cm² | Reproduced output dB | Noise level | Error rate |
|---|---|---|---|---|
| Comparative Ex. 1 | 0.3 | -3.2 | -2.1 | 1.5 × 10⁻⁴ |
| Embodiment 1 | 0.6 | 0.0 | 0.0 | 6.8 × 10⁻⁵ |
| Embodiment 2 | 0.9 | 3.0 | 2.2 | 2.7 × 10⁻⁵ |
| Embodiment 3 | 1.2 | 4.1 | 2.7 | 4.8 × 10⁻⁵ |
| Embodiment 4 | 1.5 | 6.2 | 3.1 | 6.7 × 10⁻⁵ |
| Comparative Ex. 2 | 1.8 | 7.1 (distorted) | 4.0 | 8.9 × 10⁻⁴ |
| Comparative Ex. 3 | 2.1 | 7.0 (distorted) | 5.2 | 5.3 × 10⁻³ |

As is clearly seen from Table 1, a sufficiently reproduced output was not be obtained (Comparative Example 1) when the product Mr·δ was less than 0.5 memu/cm², and the error rate increased (Comparative Examples 2 and 3) when the product Mr·δ exceeded 1.5 memu/cm². In view of this, the product Mr·δ should be 0.5 memu/cm² to 1.5 memu/cm².

The values presented above are all concerned with product Mr·δ. Needless to say, there are countless combinations of residual magnetism Mr and thickness δ of the metal magnetic thin film, for the same value of Mr·δ. Hence, the residual magnetism Mr and thickness δ of the thin film were studied further.

Table 2 presented below shows the reproduced outputs, nose levels and error rates of various sample tapes 1 to 7 that have metal magnetic thin films different in thickness δ. It should be noted that the reproduced outputs and the noise levels shown in Table 2 are those measured, using the noise level of Embodiment 6 as reference value. The metal magnetic thin film of each sample tape was adjusted to have the same residual magnetism of 300 emu/cc.

**Table 2**

| | Thickness (nm) | Reproduced output dB | Noise level dB | Error rate |
|---|---|---|---|---|
| Sample 1 | 10 | -3.1 | -1.7 | 2.1 × 10⁻⁴ |
| Sample 2 | 20 | 0.0 | 0.0 | 9.2 × 10⁻⁵ |
| Sample 3 | 30 | 3.7 | 1.2 | 7.0 × 10⁻⁵ |
| Sample 4 | 40 | 5.2 | 2.7 | 5.8 × 10⁻⁵ |
| Sample 5 | 50 | 6.3 | 3.6 | 3.3 × 10⁻⁵ |
| Sample 6 | 60 | 7.3 (distorted) | 4.4 | 7.8 × 10⁻⁴ |
| Sample 7 | 70 | 7.1 (distorted) | 5.4 | 3.8 × 10⁻³ |

If the thickness δ is 60 nm or more as in Sample 7, the spin-valve element will be saturated and the waveform will be inevitably distorted. If the thickness δ is 10 nm or more as in Sample 1, no sufficient outputs will be reproduced, the coersive force will decrease, and the resolution will therefore tend to decrease. In view of these results, the best possible thickness δ for the metal magnetic thin film is 15 to 60 nm.

Samples 8 to 14 were made, which had the same thickness δ of 35 nm and were different in residual magnetism. These samples were examined for their reproducedoutputs, noise levels and error rates. The results were as is shown in Table 3. Note that the reproduced outputs and noise levels shown in Table 3 are those measured, using the noise level of Sample 9 as reference value.

**Table 3**

| | Residual magnetism Mr (emu/cc) | Reproduced output dB | Noise level dB | Error rate |
|---|---|---|---|---|
| Sample 8 | 150 | -2.3 | -1.7 | 5.1 × 10⁻⁴ |
| Sample 9 | 200 | 0.0 | 0.0 | 1.2 × 10⁻⁴ |
| Sample 10 | 250 | 2.2 | 2.3 | 7.1 × 10⁻⁵ |
| Sample 11 | 300 | 3.7 | 3.3 | 5.0 × 10⁻⁵ |
| Sample 12 | 350 | 4.3 | 3.8 | 7.1 × 10⁻⁵ |
| Sample 13 | 400 | 6.2 | 4.5 | 8.3 × 10⁻⁴ |
| Sample 14 | 450 | 6.2 (distorted) | 5.4 | 3.0 × 10⁻³ |

If the residual magnetism Mr is too small as in Sample 8, no sufficient outputs will be reproduced. If the residual magnetism Mr is too large as in Sample 14, the coercive force will decrease, thus increasing the noise and lowering the resolution. Hence, the optimal residual magnetism is 200 to 400 emu/cc.

Samples 15 to 21 were made, which were different in terms of coercive force measured in the plane of each magnetic recording medium. These samples were examined for their noise levels and error rates. The results were as is shown in Table 4. It should be noted that the reproduced outputs and noise levels shown in Table 4 are those measured, using the noise level of Embodiment 16 as reference value.

**Table 4**

| | Coercive force (Oe) | Reproduced output dB | Noise level dB | Error rate |
|---|---|---|---|---|
| Sample 15 | 800 | -2.2 | 1.1 | 3.0 × 10⁻⁴ |
| Sample 16 | 1000 | 0.0 | 0.0 | 8.1 × 10⁻⁵ |
| Sample 17 | 1500 | 1.3 | -0.6 | 7.2 × 10⁻⁵ |
| Sample 18 | 2000 | 3.4 | -1.2 | 7.7 × 10⁻⁵ |
| Sample 19 | 2300 | 2.7 | -2.0 | 7.2 × 10⁻⁴ |
| Sample 20 | 250 | 2.0 | -2.0 | 7.2 × 10⁻⁴ |
| Sample 21 | 3000 | -0.3 | -2.4 | 5.1 × 10⁻³ |

As seen from Table 4, Sample 15 had a small coercive force and a high noise level. Sample 21 had an excessively large coercive force, hardly able to record data signals, and the outputs reproduced from decreased. Therefore, it is desired that the coersive force should range from 1000 Oe to 2500 Oe.

Table 4 shows the squareness of Samples 15 to 21, each measured in the plane direction of the sample by changing the coercive force of the sample. In view of the reproduced output and noise level, it is desired that the squareness should fall within the range of 0.6 to 0.9.

Samples 22 to 28 were made, which differed in the surface roughness of the magnetic layer of the magnetic recording medium. These samples were examined for the wear and friction coefficient of the head, the noise level, and the error rate. The results were as is shown in Table 5. It should be noted that the reproduced outputs and noise levels shown in Table 5 are those measured, using the noise level of Sample 23 as reference value.

**Table 5**

| | Surface roughness (Rz) (nm) | Wear (nm) | Friction coeff. | Reproduced output dB | Noise level dB |
|---|---|---|---|---|---|
| Sample 22 | 5 | 300 | 0.40 | 0.3 | -0.2 |
| Sample 23 | 10 | 200 | 0.34 | 0.0 | 0.0 |
| Sample 24 | 15 | 160 | 0.32 | -0.2 | 0.2 |
| Sample 25 | 20 | 140 | 0.30 | -0.4 | 0.3 |
| Sample 26 | 25 | 125 | 0.28 | -0.7 | 0.5 |
| Sample 27 | 30 | 115 | 0.26 | -0.9 | 0.7 |
| Sample 28 | 35 | 100 | 0.25 | -1.2 | 1.0 |

As can be understood from Table 5, Sample 28 had an excessive surface roughness (Rz), which resulted in a decrease of the reproduced output. Further, Sample 28 had a high noise level. By contrast, Sample 22 had an insufficient surface roughness and, hence, a large friction coefficient with respect to the magnetic head. Consequently, the wear of head increased in Sample 22. In consideration of these results, it is desired that the surface roughness (Rz) should be 10 to 30 nm.

## Claims

1. A magnetic recording medium comprising:
a nonmagnetic support; and
a metal magnetic thin film provided on the nonmagnetic support and having residual magnetism Mr and thickness δ, the product Mr·δ of which ranges from 0.5 to 1.5 memu/cm².

2. The magnetic recording medium according to claim 1, wherein the residual magnetism is 200 to 400 emu/cc.

3. The magnetic recording medium according to claim 1, wherein the thickness δ is 15 to 60 nm.

4. The magnetic recording medium according to claim 1, wherein a coercive force in the plane is 1000 to 2500 Oe.

5. The magnetic recording medium according to claim 1, wherein squareness in the plane direction is 0.6 to 0.9.

6. The magnetic recording medium according to claim 1, wherein a surface roughness (Rz) is 10 to 30 nm.

7. The magnetic recording medium according to claim 1, which is designed for use in a helical-scan magnetic recording system that incorporates a giant magnetoresistive head.

8. The magnetic recording medium according to claim 7, wherein thegiant magnetoresistive head reproduces an output of 600 µV/µm to 10 mV/µm.

9. The magnetic recording medium according to claim 7, wherein the giant magnetoresistive head has a spin-valve magnetoresistive element.

10. The magnetic recording medium according to claim 1, wherein the metal magnetic thin film is one formed by means of sputtering.
